# EUROPEAN PATENT APPLICATION

(11) **EP 1 073 305 A1**
(43) Date of publication of application: **31.01.2001**
(21) Application number: 99440214.7
(22) Date of filing: 29.07.1999
(51) Int. Cl.: H04Q 7/38

(54) **A method of transferring an established call between a mobile terminal and a first base station in a cellular communications network to a second base station of the network**

(71) Applicant: ALCATEL, 75008 Paris (FR)
(72) Inventor: Bejjani, Elie, 92210 Saint-Cloud (FR); Kumar, Vinod, 75005 Paris (FR); Bouquier, Jean-François, 75004 Paris (FR)
(74) Representative: Rausch, Gabriele, Dr.

(57) **Abstract**

The invention relates to a method of handing over a call that is established between a mobile terminal (MS1, MS2) and a first base station (BS1) of a cellular communications network to a second base station (BS2, BS3) of the network. According to the invention, a decision to hand over the call is taken at a control station for controlling the base stations, and it is taken as a function of a magnitude relating to the value of the angular dispersion of the radio signal transmitted by the terminal (MS1, MS2) and measured at the base stations (BS1, BS2, BS3).

## Description

The field of the invention is that of radio channel transmission systems. More precisely, the present invention relates to transferring an established call between a mobile terminal and a first base station so that it becomes an established call between the same mobile terminal and a second base station of the cellular network. Such a transfer of a call that is already in progress is commonly referred to as a "handover".

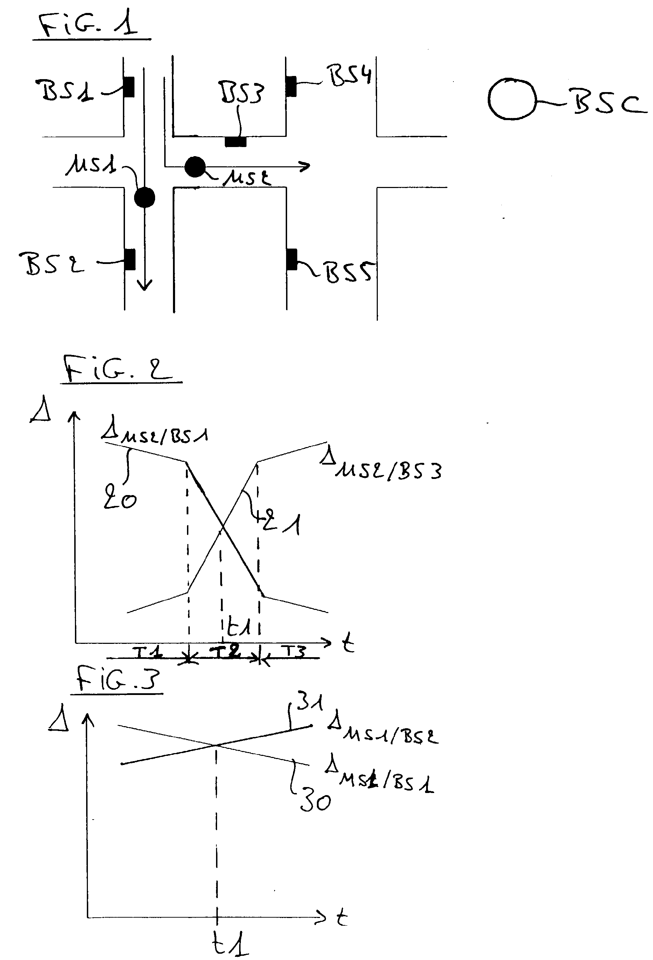

Figure 1 is a simplified view of a Manhattan type cellular communications network, where the term "Manhattan" refers to the perpendicular disposition of the streets.

Five base stations BS1 to BS5 are placed on blocks of buildings between which mobile terminals can move. Two of the base stations BS1 and BS2 are placed in a first street, a third base station BS3 being placed in a second street that is perpendicular to said first street. Two mobile terminals MS1 and MS2, e.g. GSM type terminals on board vehicles, communicate with base station BS1, one of the mobile terminals, MS1, is moving towards base station BS2, while the other, MS2, is moving towards base station BS3.

Handover procedures consist in transferring firstly the ongoing call between terminal MS1 and base station BS1 to base station BS2, and secondly the ongoing call between terminal MS2 and base station BS1 to base station BS3 so that both terminals MS1 and MS2 interrupt their calls with base station BS1 and continue to communicate, but with base stations BS2 and BS3, respectively.

In the GSM standard, a handover procedure consists in the subscriber terminal measuring the BCCH levels of the surrounding base stations and in sending the measured levels of the six base stations that it is receiving best to the base station with which it is currently in communication. The station controlling the base stations then decides, on the basis of a power criterion, whether or not it is appropriate to launch a handover procedure, and if so to which base station the ongoing call is to be transferred.

The problem encountered with that type of handover is that in a transmission medium that has high call density, e.g. in a city, the signal powers received by the base stations and the interference between adjacent channels vary over a wide range of powers, because of the multiple paths encountered. It is therefore necessary in each terminal to average out the levels of the signals received. This averaging can last for several seconds (typically 10 seconds in an environment having numerous multiple paths) during which the quality of the ongoing call between the terminal and a given base station can become severely degraded, or even interrupted (particularly with micro- or pico-cells), which is not acceptable when it is desired to have high quality of service.

In addition, the quality of the signaling signals transmitted from the base stations and the terminal is also important.

Another drawback is that there exists a significant risk, in a configuration of the kind shown in Figure 1, that the terminal MS1 will enter briefly into communication with the base station BS3 after ceasing to be in communication with base station BS1 (first handover) and prior to entering into communication with base station BS2 (second handover), instead of entering directly into communication with base station BS2 after interrupting communication with base station BS1. Too many handovers degrades the quality of the ongoing call.

A particular object of the present invention is to remedy those drawbacks.

More precisely, an object of the invention is to propose a simplified handover procedure making it possible, on the basis of a small number of signal interchanges, to take a decision quickly as to whether or not it is appropriate to perform a handover for a call currently in progress between a terminal and a base station of a cellular network.

Another object of the invention is to provide such a procedure that makes it possible to limit the number of handovers by eliminating those which are not absolutely necessary to enabling the current call to continue.

These objects, and others that appear below, are achieved by a method of handing over a call that is established between a mobile terminal and a first base station of a cellular communications network to a second base station of the network, the handover being decided on at a control station controlling the base stations as a function of a criterion, the method being characterized in that the criterion is a magnitude relating to the value of the angular dispersion of the radio signal transmitted by the terminal and measured at the base stations.

Advantageously, the criterion is the derivative of the angular dispersion of the radio signal transmitted by the terminal and measured at the base stations.

The method of the invention is preferably implemented in a GSM type network.

The invention also provides a control station for controlling base stations in a cellular communications network, the control station having means for deciding when to hand over a call that is established between a mobile terminal and a first base station of the network to a second base station of the network, the handover being decided on as a function of a criterion, the control station being characterized in that the criterion is a magnitude relating to the value of the angular dispersion of the radio signal transmitted by the terminal and measured at the base stations.

Other characteristics and advantages of the invention will appear on reading the following description of a preferred implementation given by way of non-limiting illustration, and from the accompanying drawing, in which:
· Figure 1 is a simplified view of a Manhattan type cellular communications network;
· Figure 2 shows variations as a function of time in the derivatives of the angular dispersions of signals transmitted by the mobile terminal MS2 in Figure 1, said signals being received by the base stations BS1 and BS3; and
· Figure 3 shows variations as a function of time in the derivatives of the angular dispersions of signals transmitted by the mobile terminal MS1 in Figure 1, said signals being received by the base stations BS1 and BS2.

Figure 1 is described above with reference to the state of the art.

Figure 2 shows how the derivatives of the angular dispersions of the signals transmitted by the mobile terminal MS2 of Figure 1 vary as a function of time, said signals being received by the base stations BS1 and BS3.

When a transmitter transmits a signal for the attention of a receiver, the multiple paths due to the presence of obstacles in the vicinity of the transmitter give rise to angular dispersion in the transmitted signal. This angular dispersion is characterized to a first approximation by an angle that becomes larger the nearer the transmitter is to the receiver.

The present invention proposes making use of measurements of the angular dispersions of the signals received at base stations in a cellular network as a criterion for deciding on handover.

In order to make the invention simpler to understand, it is assumed below that the mobile terminals MS1 and MS2 are moving at constant speed. Nevertheless, the invention is not limited to movement at constant speed.

Characteristic 20 in Figure 2 corresponds to the derivative of the angular dispersion of the signals transmitted by the mobile terminal MS2 and received by the base station BS1 (also written Δ_{MS2/BS1}), while characteristic 21 corresponds to signals transmitted by the mobile terminal MS2 and received by the base station BS3 (also written Δ_{MS2/BS3}).

From characteristic 20, it can be seen that initially the derivative of the angular dispersion of the signals transmitted by the mobile terminal MS2 decreases slowly for a period of time T1, said derivative being measured at the base station BS1. This decrease is due to the distance between BS1 and MS2 increasing, as MS2 moves away from BS1 towards BS2.

During this period T1, it can be seen from the other characteristic 21 that the value of the derivative of the angular dispersion of the signals received by the base station BS3 increases, since the terminal MS2 is approaching BS3.

This slow decrease in characteristic 20 is followed by a period T2 during which terminal MS2 leaves the street in which the base stations BS1 and BS2 are installed and enters the street in which the base station BS3 is installed. Under such circumstances, characteristic 20 decreases rapidly because terminal MS2 is no longer in direct line of sight of station BS1. The call is conveyed only by reflected radio waves (multiple paths). In contrast, terminal MS2 is now in direct line of sight of base station BS3, which gives rise to a large increase in the value of the derivative of the angular dispersion of the signals received by the base station BS3 (characteristic 21).

During a period T3 following the period T2, the derivative shown by characteristic 20 continues to decrease, but not as quickly as during the period T2, while the derivative shown in characteristic 21 continues to increase, likewise not as quickly as during period T2.

Figure 3 shows how the derivatives of the angular dispersions of the signals transmitted by mobile terminal MS1 of Figure 1 vary as a function of time, these signals being the signals received by base stations BS1 and BS2.

Characteristic 30 in Figure 3 corresponds to the derivative of the angular dispersion of the signals transmitted by mobile terminal MS1 and received by base station BS1 (also written Δ_{MS1/BS1}), while characteristic 31 corresponds to the signals transmitted by mobile terminal MS1 and received by base station BS2 (also written Δ_{MS1/BS2}).

Characteristic 30 has a constant negative slope as terminal MS1 moves away from base station BS1 while remaining in direct line of sight of said base station. Characteristic 31 has a positive slope, with terminal MS1 approaching base station BS2 in direct line of sight.

The invention proposes deciding on call handover by using as a decision criterion a magnitude relating to the value of the angular dispersion of the radio signal as transmitted by the terminal and as measured at the base stations. By way of example, this magnitude is the derivative of the angular dispersion, or merely the angular dispersion itself.

In the above-described example, the control station (referenced BSC in Figure 1) which receives the magnitudes relating to the angular dispersion values as measured at the base stations, ideally decides to hand over a call from base station BS1 to base station BS3 at the instant tl when the characteristics 20 and 21 cross. The call established between mobile terminal MS1 and base station BS1 is then handed over to become a call between said mobile terminal and satellite BS3.

The control station BSC receives data relating to the characteristics of Figures 2 and 3 and it decides whether or not a handover procedure should be performed by comparing the data it receives. In the above example, the control station observes that terminal MS1 which is in communication with base station BS1 is going towards base station BS2 and not towards base station BS3. Handover will therefore be performed to base station BS2 and not to base station BS3. In the state of the art, two successive handovers would have been implemented, a first to enable MS1 to communicate with BS3, and a second to enable MS1 to communicate with BS2.

Angular dispersion is preferably measured by analyzing the signals transmitted on the traffic channel used by the terminal. This traffic channel is referenced TCH in the GSM standard.

The invention thus makes it possible to reduce the number of handovers, thereby conferring better quality to calls in the cellular network. In addition, handovers are decided on much more quickly than in the state of the art since the power of the signals received at the terminals is no longer measured. This also contributes to improving call quality.

Another advantage of the invention is that only a limited amount of signaling information is interchanged since only the signals transmitted by the terminals are needed for making handover decisions.

The control station controlling the base stations responds to said magnitudes as measured at the base stations, to decide which base station is the most suitable for continuing an ongoing call.

Angular dispersion is advantageously measured using the method described in French patent application No. 97/08892 filed on July 11, 1997. It is also possible to use algorithms of the MUSIC or ESPRIT types that enable the angular dispersion of a received signal to be determined.

The invention also provides a control station for controlling base stations in a cellular communications network, the control station having means for deciding when to hand over a call that is established between a mobile terminal and a first base station of the network to a second base station of the network. The criterion used for deciding to hand over a call is a magnitude relating to the value of the angular dispersion of the radio signal transmitted by the terminal and measured at the base stations.

The invention can advantageously be applied in a transmission network of the space division multiple access (SDMA) type. The invention also provides a receiver implementing the method.

## Claims

1. A method of handing over a call that is established between a mobile terminal (MS1, MS2) and a first base station (BS1) of a cellular communications network to a second base station (BS2, BS3) of said network, the handover being decided on at a control station controlling said base stations (BS1, BS2, BS3) as a function of a criterion, the method being characterized in that said criterion is a magnitude relating to the value of the angular dispersion of the radio signal transmitted by said terminal (MS1, MS2) and measured at said base stations (BS1, BS2, BS3).

2. A method according to claim 1, characterized in that said criterion is the derivative of said angular dispersion of the radio signal transmitted by said terminal (MS1, MS2) and measured at said base stations (BS1, BS2, BS3).

3. A method according to claim 1 or 2, characterized in that it is implemented in a GSM type network.

4. A control station (BSC) for controlling base stations (BS1, BS2, BS3) in a cellular communications network, said control station (BSC) having means for deciding when to hand over a call that is established between a mobile terminal (MS1, MS2) and a first base station (BS1) of said network to a second base station (BS2, BS3) of said network, the handover being decided on as a function of a criterion, the control station being characterized in that said criterion is a magnitude relating to the value of the angular dispersion of the radio signal transmitted by said terminal (MS1, MS2) and measured at said base stations (BS2, BS2, BS3).
